# EUROPEAN PATENT SPECIFICATION

(11) **EP 3 006 694 B1**
(45) Date of publication and mention of the grant of the patent: **28.11.2018**
(21) Application number: 14842587.9
(22) Date of filing: 27.08.2014
(51) Int. Cl.: F02B 37/18, F02B 39/00, F01D 17/10

(54) **TURBINE, TURBOCHARGER, INTERNAL COMBUSTION ENGINE, AND SHIP**
TURBINE, TURBOLADER, BRENNKRAFTMASCHINE UND SCHIFF
TURBINE, TURBOCOMPRESSEUR, MOTEUR À COMBUSTION INTERNE, ET NAVIRE

(30) Priority: 05.09.2013 JP 2013184411
(43) Date of publication of application: 13.04.2016
(73) Proprietor: Mitsubishi Heavy Industries, Ltd., Tokyo 108-8215 (JP)
(72) Inventor: SHIRAISHI, Keiichi, Tokyo 108-8215 (JP); ONO, Yushi, Tokyo 108-8215 (JP)
(74) Representative: Hoffmann Eitle
(86) International application number: PCT/JP2014/072502
(87) International publication number: WO 2015/033844

(56) References cited:
- FR-A1- 2 561 309
- JP-A- H11 324 691
- JP-A- 2010 216 468
- JP-A- 2011 149 327
- JP-A- 2013 124 626
- US-A- 4 304 097

## Description

### Technical Field

The present invention relates to an axial-flow turbine, a turbocharger, an internal combustion engine, and a ship.

### Background Art

Marine engines, generator engines, and the like (for example, diesel engines) are required to be improved in performance when operating under a low load condition. In order to be improved in performance when operating under a low load condition, it is desired that supercharging pressure of a turbocharger mounted in an internal combustion engine is set to be high. However, when the internal combustion engine operates under a high load condition, the supercharging pressure becomes excessively high. Therefore, a so-called exhaust gas bypass system in which supercharging pressure is prevented from increasing by causing exhaust gas to bypass the turbocharger when an internal combustion engine operates under a high load condition leading to a significant amount of exhaust gas is in practical use (for example, refer to Japanese Unexamined Patent Application Publication No. 2011-149327 and Japanese Unexamined Patent Application Publication No. 2013-124626).

US-A-4,304,097 discloses a radial-flow turbine with a bypass section which is driven by exhaust gas discharged from an internal combustion engine. FR-A1-2 561 309 discloses another radial-flow turbine with a bypass section.

### Summary of Invention

### Technical Problem

As illustrated in Fig. 1 of JP-A-2011-149327, the exhaust gas bypass system of JP-A-2011-149327 is configured to include a bypass pipe L2 of which one end is connected to an intermediate portion of an exhaust pipe L1 and the other end is connected to an intermediate portion of an exhaust pipe L3, and an exhaust gas bypass control valve V1 which is provided in an intermediate portion of the bypass pipe L2 and controls the flow rate of exhaust gas introduced to a turbocharger 3. In this manner, in the system of JP-A-2011-149327, since exhaust gas before flowing into the turbocharger 3 is branched off, the bypass pipe L2 needs to be provided separately from the turbocharger 3.

Accordingly, the bypass pipe L2 has to be installed around the inside of an engine room within a limited space, thereby resulting in a problem in that the exhaust gas bypass system cannot be applied to a ship which cannot ensure space necessary for the bypass pipe L2 to be installed around.

In addition, even though space necessary for the bypass pipe L2 to be installed around can be ensured, large-scaled piping work for the bypass pipe L2 to be installed around has to be carried out in the engine room, thereby resulting in a costly problem.

Meanwhile, as illustrated in Fig. 1 of JP-A-2013-124626, the exhaust gas bypass system of JP-A-2013-124626 is provided with an exhaust gas bypass flow passage 22b inside a turbocharger 1. Therefore, there is no need to provide a bypass pipe separately from the turbocharger as in the exhaust gas bypass system of JP-A-2011-149327. In the exhaust gas bypass system of JP-A-2013-124626, a bypass chamber 32 is provided between an inner casing and an outer casing, and exhaust gas is introduced to the exhaust gas bypass flow passage 22b which communicates with the bypass chamber 32.

However, an inner periphery side flow path which introduces exhaust gas to an axial-flow turbine is provided between the inner casing and the outer casing so that the bypass chamber 32 and the inner periphery side flow path are in a state of partially communicating with each other. In addition, an opening/closing valve is provided in a flow path ranging from an inlet through which exhaust gas flows into the turbocharger 1, to the bypass chamber 32.

Therefore, even though the opening/closing valve is closed so as not to allow the bypass of exhaust gas, exhaust gas flows out from the bypass chamber 32, thereby resulting in a problem in that there may be an occurrence of a bad influence affecting the performance of the turbocharger 1. Specifically, there is a problem in which a portion of exhaust gas inside the inner casing flows into the bypass chamber 32 through a gap between the inner casing and the outer casing and flows out to the outside without passing through a turbine rotor blade, thereby resulting in a reduced flow rate of exhaust gas which is used for driving the turbine rotor blade. Moreover, the inner casing of JP-A-2013-124626 needs to have a special structure in order to form the bypass chamber 32, thereby resulting in another problem in that it takes man-hours to design the inner casing and the manufacturing cost thereof increases.

The present invention has been made in consideration of the above-described circumstances and aims to provide a turbine and a turbocharger, and an internal combustion engine and a ship having the turbine and the turbocharger which can be prevented from a deterioration in performance occurring when an opening/closing valve is closed and can reduce man-hours to design a casing and the manufacturing cost thereof.

### Solution to Problem

The present invention employs the following means in order to solve the above-described problems.

An axial-flow turbine according to the present invention is configured as recited in claim 1.

In the turbine according to the present invention, the bypass flow passage is formed by the bypass section which is provided in the outer periphery of the casing forming the flow path of exhaust gas discharged from the internal combustion engine. The bypass flow passage is a flow path for introducing exhaust gas to the exhaust gas outlet without causing exhaust gas to pass through the turbine rotor blade, and the opening/closing valve is provided in the flow path. When the bypass flow passage is closed by the opening/closing valve, exhaust gas is prohibited from being introduced to the exhaust gas outlet without passing though the turbine rotor blade. Thus, there is no bad influence affecting the performance of the turbine.

In this manner, according to the turbine of the present invention, it is possible to prevent deterioration of performance occurring when the opening/closing valve is closed and to reduce man-hours to design the casing and the manufacturing cost thereof.

In the turbine according to a first aspect of the present invention, the casing includes an inner casing which is arranged coaxially with a rotor shaft of the turbine rotor blade, and an outer casing which is arranged outside the inner casing and forms an inner periphery side flow path introducing the exhaust gas that flows in through an exhaust gas inlet in a direction intersecting a rotor shaft direction of the turbine, to the turbine rotor blade together with the inner casing. The outer casing has a first opening section which is open in the direction intersecting the rotor shaft direction and communicates with an inlet section of the bypass flow passage, a second opening section which is open in the direction intersecting the rotor shaft direction and communicates with an outlet section of the bypass flow passage, and an outer periphery side flow path which is arranged on an outer periphery side closer than the inner periphery side flow path and introduces the exhaust gas flowing in through the second opening section, to the exhaust gas outlet.

In the turbine according to the present invention, exhaust gas flowing in through the exhaust gas inlet is introduced to the turbine rotor blade through the inner periphery side flow path which is formed by the inner casing and the outer casing. The exhaust gas which has passed through the turbine rotor blade is introduced to the exhaust gas outlet. In addition, exhaust gas which has flowed into the inner periphery side flow path along the direction intersecting the rotor shaft direction of the turbine rotor blade flows into the inlet section of the bypass flow passage via the first opening section of the outer casing. Since the first opening section is open in the direction intersecting the rotor shaft direction of the turbine rotor blade, exhaust gas having a component of velocity in the direction intersecting the rotor shaft direction of the turbine rotor blade flows into the inlet section of the bypass flow passage through the first opening section. The exhaust gas which has flowed in through the first opening section flows into the outer periphery side flow path through the second opening section and merges with exhaust gas which has passed through the turbine rotor blade, thereby being introduced to the exhaust gas outlet.

The bypass flow passage connects the first opening section and the second opening section with each other which are included in the outer casing, while interposing the opening/closing valve therebetween. When the opening/closing valve is in a closed state, gas flowing in through the exhaust gas inlet does not leak to the turbine outlet casing without passing through the turbine blade 4. Accordingly, there is no bad influence applied to the performance of a turbocharger. In addition, the inner casing has no special structure in order to introduce exhaust gas to the bypass flow passage. The inner casing has a structure to form the inner periphery side flow path for introducing exhaust gas to the turbine, together with the outer casing.

In this manner, according to the turbocharger of the present invention, it is possible to prevent deterioration of performance occurring when the opening/closing valve is closed and to reduce man-hours to design the inner casing and the manufacturing cost thereof.

In the turbocharger according to the present invention, each of the inner casing and the outer casing may be configured to be bonded to an exhaust outlet casing which forms the exhaust gas outlet by using a plurality of bolts. The inner casing and the outer casing may be configured to be able to arbitrarily set a rotational position around the rotor shaft of the turbine rotor blade with respect to an exhaust gas guide section by attaching and detaching the plurality of bolts.

In this manner, the exhaust gas inlet provided in the inner casing and the outer casing, and the exhaust gas outlet provided in the exhaust outlet casing can be installed at arbitrary rotational positions in accordance with the environment where the turbocharger is installed.

A turbocharger according to the present invention includes any one of the turbines described above.

In addition, an internal combustion engine according to the present invention includes the turbocharger described above.

In addition, a ship according to the present invention includes the internal combustion engine described above.

### Advantageous Effects of Invention

According to the present invention, it is possible to provide a turbine and a turbocharger, and an internal combustion engine and a ship having the turbine and the turbocharger which can be prevented from a deterioration in performance occurring when an opening/closing valve is closed and can reduce man-hours to design a casing and the manufacturing cost thereof.

### Brief Description of Drawings

Fig. 1 is a longitudinal sectional view of a turbocharger according to the present invention.
Fig. 2 is a right side view of the turbocharger illustrated in Fig. 1 and is a diagram in which a bypass section and an opening/closing valve are not illustrated.
Fig. 3 is another right side view of the turbocharger illustrated in Fig. 1.

### Description of Embodiment

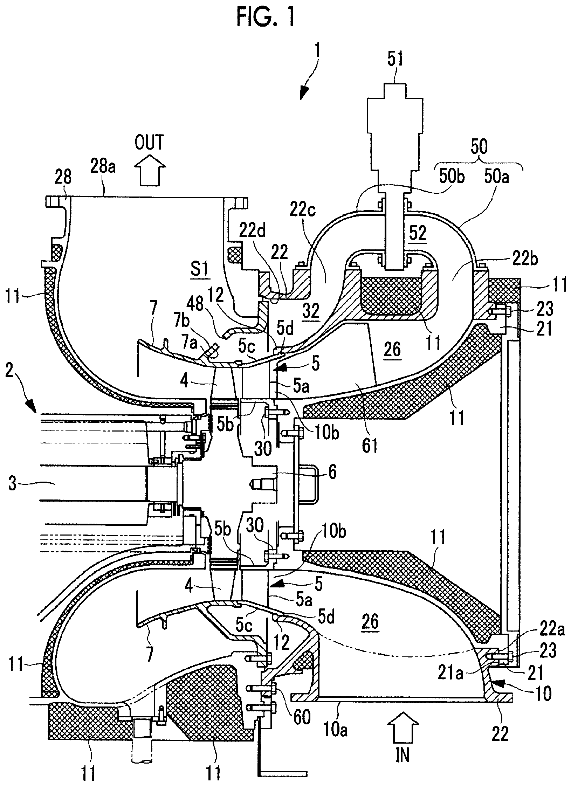

Hereinafter, a turbocharger according to the present invention will be described with reference to Fig. 1.

Fig. 1 is a longitudinal sectional view illustrating the turbocharger according to the present invention.

For example, a turbocharger 1 is an apparatus which compresses combustion air of a marine internal combustion engine and a generator engine (not illustrated) and forcibly sends the highly dense air into a combustion chamber of an internal combustion engine. The turbocharger 1 according to the present invention is provided in the internal combustion engine, and the internal combustion engine including the turbocharger 1 is provided in a ship.

The turbocharger 1 is driven by exhaust gas discharged from the internal combustion engine. The turbocharger 1 includes an axial-flow turbine 2 which is driven by exhaust gas which the internal combustion engine discharges, a rotor shaft 3 which is rotatively driven by the axial-flow turbine 2, a compressor (not illustrated) which compresses air as the rotor shaft 3 is rotatively driven, and a bearing housing (not illustrated) which is provided between the axial-flow turbine 2 and the compressor and serves as a bearing support for the rotor shaft 3.

The portions indicated by latticed hatching in Fig. 1 are insulation materials 11 which are installed for the purpose of insulation and soundproofing.

The axial-flow turbine 2 includes turbine rotor blades 4 which are rotatively driven by exhaust gas discharged from the internal combustion engine, a turbine nozzle 5 which introduces exhaust gas to the turbine rotor blades 4, and an exhaust gas inlet casing 10.

The turbine rotor blades 4 are arranged at positions close to a downstream side which becomes an outlet of the turbine nozzle 5. A disk-shaped turbine disk 6 is arranged at one end portion of the rotor shaft 3 in a shaft direction. A plurality of the turbine rotor blades 4 are attached to an outer periphery edge portion of the turbine disk 6 in a circumferential direction at equal intervals. Then, the turbine disk 6 and the rotor shaft 3 rotate as high temperature exhaust gas ejected from the turbine nozzle 5 passes through the turbine rotor blades 4 and expands.

The turbine nozzle 5 includes a plurality of nozzle guide vanes 5a which are annularly arranged along the circumferential direction while having the rotor shaft 3 as a center axis, and a ring-shaped inner periphery side member 5b which is arranged on a base side (an inner periphery side) of the nozzle guide vanes 5a and is bonded to a base of the nozzle guide vanes 5a. In addition, the turbine nozzle 5 includes a ring-shaped outer periphery side member 5c which is arranged on a blade end side (an outer periphery side) of the nozzle guide vanes 5a and is bonded to a blade end of the nozzle guide vanes 5a. The turbine nozzle 5 is a nozzle which is generally referred to as a nozzle ring and is arranged at a position close to an upstream side of the turbine rotor blades 4.

The outer periphery side member 5c has a shape which increases in diameter in the shape of a trumpet from an outlet side of exhaust gas (the downstream side of a flow of exhaust gas) to an inlet side (the upstream side of a flow of exhaust gas). In addition, a step difference portion 12 formed by bending an inner peripheral surface of the exhaust gas inlet casing 10 in a direction of the turbine disk 6 is provided at an end portion of an outer casing 22 (a portion of the exhaust gas inlet casing 10) on a turbine disk 6 side. Then, the step difference portion 12 is configured to engage with (fit) a step difference portion 5d which is provided at the end portion of the outer periphery side member 5c on the exhaust gas inlet side in the shaft direction.

According to the claimed invention an exhaust gas guide ring 7 (an exhaust gas guide section) is connected to the end portion of the outer periphery side member 5c on the outlet side (the downstream side of a flow of exhaust gas). A connection portion between the outer periphery side member 5c and the exhaust gas guide ring 7 is a spigot structure in which both of the end portions fit each other. The exhaust gas guide ring 7 introduces exhaust gas which has passed through the axial-flow turbine 2 to an exhaust gas outlet 28a.

The exhaust gas inlet casing 10 (the casing) is a member in which an inner casing 21 and an outer casing 22 independent from each other are bonded by a fastening portion including a bolt 23. The inner casing 21 and the outer casing 22 are arranged coaxially with the axial-flow turbine 2. The outer casing 22 is arranged outside the inner casing 21. A space formed between the inner casing 21 and the outer casing 22 serves as an exhaust gas flow passage (an inner periphery side flow path) 26 for introducing exhaust gas to the turbine nozzle 5. Exhaust gas flowing in through the exhaust gas inlet 10a in a direction intersecting the shaft direction (a direction orthogonal thereto in the example illustrated in Fig. 1) of the axial-flow turbine 2 is introduced to the exhaust gas flow passage 26.

A flow guid plate 61 is arranged in the exhaust gas flow passage 26. The flow guide plate 61 controls a rotational component of exhaust gas which has flowed into the exhaust gas flow passage 26 through the exhaust gas inlet 10a, around an axial line of a turbine shaft 2. As exhaust gas abuts on the flow guide plate 61, the rotational component of exhaust gas around the axial line of the turbine shaft 2 is controlled, thereby being converted into a flow along the axial line.

The flow guide plate 61 is arranged at a position on a side opposite to the exhaust gas inlet 10a (a position where a phase is displaced by 180° around the axial line of the turbine shaft 2). As the flow guide plate 61 is provided at the position, the space inside the exhaust gas flow passage 26 which is partitioned by the flow guide plate 61 becomes a space of bilateral symmetry when viewed in the axial line direction of the turbine shaft 2. In this manner, exhaust gas which has flowed in through the exhaust gas inlet 10a flows equally on both the right and left when viewed in the axial line direction of the turbine shaft 2.

In the exhaust gas inlet casing 10 having a double structure configured to include the inner casing 21 and the outer casing 22, the exhaust gas flow passage 26 is formed throughout the whole circumference in a rotational direction of the turbine rotor blades 4. Exhaust gas which has been introduced through the exhaust gas inlet 10a of the exhaust gas inlet casing 10 as indicated by the arrow IN in Fig. 1 is introduced to an exhaust gas outlet 10b passing through the exhaust gas flow passage 26. Thereafter, exhaust gas is discharged to the outside through the exhaust gas outlet 28a of an exhaust outlet casing 28 as indicated by the arrow OUT in Fig. 1. In addition, the exhaust gas outlet 10b is provided to be open throughout the whole circumference in the rotational direction of the turbine rotor blades 4 so as to supply exhaust gas to the turbine nozzle 5.

The exhaust gas inlet casing 10 is bonded to the exhaust outlet casing 28 by using a plurality of bolts including bolts 60. The exhaust gas inlet casing 10 can arbitrarily set a rotational position around the shaft of the axial-flow turbine 2 with respect to the exhaust outlet casing 28 by attaching and detaching the plurality of bolts including the bolts 60.

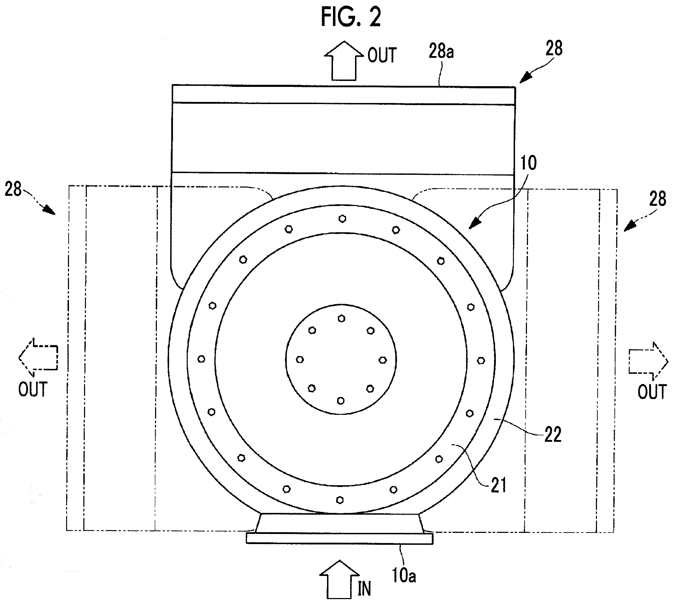

Fig. 2 is a right side view of the turbocharger illustrated in Fig. 1 and is a diagram in which a bypass section 50 and an opening/closing valve 51 are not illustrated.

In Fig. 2, the exhaust outlet casing 28 indicated by the solid line corresponds to the exhaust outlet casing illustrated in Fig. 1. According to the arrangement of the exhaust outlet casing 28 indicated by the solid line in Figs. 1 and 2, the rotational position of the exhaust outlet casing 28 with respect to the exhaust gas inlet casing 10 can be set so as to cause the exhaust gas inlet 10a and the exhaust gas outlet 10b to be arranged in the same direction as each other. In addition, according to the arrangement of the exhaust outlet casing 28 indicated by the solid line in Fig. 2, the rotational position of the exhaust outlet casing 28 with respect to the exhaust gas inlet casing 10 can be set so as to cause the exhaust gas inlet 10a and the exhaust gas outlet 10b to be arranged in a direction orthogonal to each other. In addition, the rotational position can be arbitrarily set (not illustrated in Fig. 2).

In the above-described exhaust gas inlet casing 10 having a double structure, one end portion of the inner casing 21 (the end portion on the right side in Fig. 1) is fixedly supported by the fastening portion including the bolt 23 at one end portion of the outer casing 22 (the end portion on the right side in Fig. 1). In other words, the inner casing 21 is provided with a flange surface 21a which is formed at the end portion on the right side in Fig. 1 which becomes a side opposite to the turbine disk 6. As a flange surface 22a of the outer casing 22 is in a state of being superimposed on the flange surface 21a so as to be fastened by the fastening portion including the bolt 23, the inner casing 21 and the outer casing 22 are fixed. Both the flange surfaces 21a and 22a are arranged on a surface orthogonal to the shaft direction of the rotor shaft 3 which rotates integrally with the turbine disk 6.

Meanwhile, the inner periphery side member 5b which is formed integrally with the turbine nozzle 5 is attached to an inner periphery section at the other end portion of the inner casing 21 (the end portion on the left side in Fig. 1) via bolts 30.

The inner periphery section of the outer casing 22 is provided with a first opening section 22b which is open in a direction orthogonal to the shaft direction of the axial-flow turbine 2 (the direction orthogonal thereto in the example illustrated in Fig. 1). The first opening section 22b is open on an outer peripheral surface of the outer casing 22 and communicates with an inlet section of the bypass section 50 which forms a bypass flow passage 52. The bypass flow passage 52 is a flow path for causing exhaust gas flowing into the exhaust gas flow passage 26 arranged on the inner periphery side to be introduced to the exhaust gas outlet 28a without passing though the axial-flow turbine 2.

In addition, the inner periphery section of the outer casing 22 is provided with a second opening section 22c which is open in the direction orthogonal to the shaft direction of the axial-flow turbine 2 (the direction orthogonal thereto in the example illustrated in Fig. 1). The second opening section 22c is open on the outer peripheral surface of the outer casing 22 and communicates with an outlet section of the bypass section 50 which forms the bypass flow passage 52.

The bypass section 50 is configured to have two members such as a first bypass section 50a and a second bypass section 50b. The first bypass section 50a is a pipe member which is fixed to the first opening section 22b of the outer casing 22 by a bolt or the like. In addition, the second bypass section 50b is a pipe member which is fixed to the second opening section 22c of the outer casing 22 by a bolt or the like.

The opening/closing valve 51 for opening and closing the bypass flow passage 52 is provided between the first bypass section 50a and the second bypass section 50b. When the opening/closing valve 51 is in an open state, exhaust gas which has flowed into the first opening section 22b circulates toward the second opening section 22c. Meanwhile, when the opening/closing valve 51 is in a closed state, exhaust gas which has flowed into the first opening section 22b is blocked so as not to flow toward the second opening section 22c.

The opening/closing valve 51 is controlled by a control unit (not illustrated) so as to be in a state of any one of the open state and the closed state. However, a different form may be adopted. For example, the opening/closing valve 51 may be controlled by the control unit so as to be in a state of any one of the open state and the closed state in multiple stages having different opening degrees. For example, when the temperature of ambient air of the turbocharger 1 is relatively high and the flow rate of exhaust gas passing through the bypass flow passage 52 is favorably intended to be a small amount, the control unit (not illustrated) may perform controlling so as to be in the open state of which the opening degree is reduced.

In Fig. 1, the bypass section 50 and the opening/closing valve 51 are provided at a position facing the exhaust gas inlet 10a (a rotational position rotated by 180 degrees around the shaft of the axial-flow turbine 2). However, a different rotational position may be adopted.

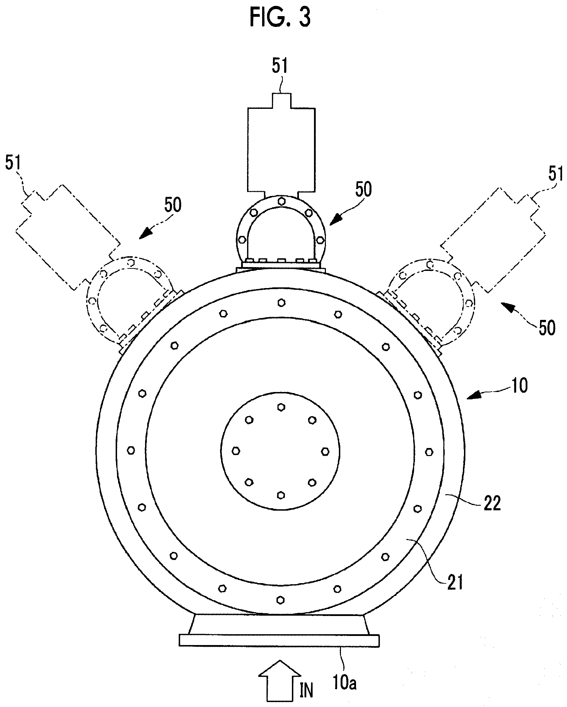

Fig. 3 is another right side view of the turbocharger illustrated in Fig. 1. The bypass section 50 and the opening/closing valve 51 indicated by the solid line in Fig. 3 are arranged at the same position as that illustrated in Fig. 1. Meanwhile, the bypass section 50 and the opening/closing valve 51 indicated by the dotted line in Fig. 3 are arranged at positions different from that illustrated in Fig. 1. Moreover, the bypass section 50 and the opening/closing valve 51 may be provided at an arbitrary rotational position around the shaft of the axial-flow turbine 2.

The rotational position around the shaft of the axial-flow turbine 2 with respect to the exhaust gas inlet 10a of the bypass section 50 and the opening/closing valve 51 is determined when manufacturing the outer casing 22. However, it is desirable that the rotational position is determined in accordance with the environment and the like of the installation place in the ship where the turbocharger 1 is installed. In addition, as described with reference to Fig. 2, the rotational position of the exhaust outlet casing 28 with respect to the exhaust gas inlet casing 10 can be arbitrarily adjusted by attaching and detaching the bolts. Therefore, in accordance with the environment and the like of the installation place in the ship where the turbocharger 1 is installed, the position of the exhaust gas inlet 10a, the position of the bypass section 50 and the opening/closing valve 51, and the position of the exhaust gas outlet 28a can be arbitrarily set. Accordingly, it is possible to provide a suitable turbocharger 1 in accordance with the environment and the like of the installation place in the ship.

According to the claimed invention the The second opening section 22c of the outer casing 22 communicates with an exhaust gas flow passage 32 (an outer periphery side flow path) through which exhaust gas flowing in through the second opening section 22c is introduced to the exhaust gas guide ring 7 (the exhaust gas guide section). As illustrated in Fig. 1, the exhaust gas flow passage 32 is arranged on the outer periphery side closer than the exhaust gas flow passage 26 (the inner periphery side flow path).

The exhaust gas flow passage 32 is a space which is formed by including the other end surface 22d forming the other end portion (the end portion on the left side in Fig. 1) of the outer casing 22, the outer peripheral surface positioned outside (the outer periphery side) of the outer periphery side member 5c in a radial direction, and one surface 7a forming a concavity (a depression) at one end portion (the end portion on the right side in Fig. 1) of the exhaust gas guide ring 7 facing the other end surface 22d.

The exhaust gas flow passage 32 communicates with a space S1 which is formed outside (the outer periphery side) the exhaust gas guide ring 7 in the radial direction inside the exhaust outlet casing 28 via a penetration hole 48 which penetrates the one surface 7a and the other surface 7b positioned on a side opposite thereto in a plate thickness direction. Therefore, the bypass flow passage 52 and the space S1 communicate with each other via the exhaust gas flow passage 32 and the penetration hole 48.

Subsequently, description will be given regarding a flow of exhaust gas in the turbocharger 1 having the above-described configuration.

When the internal combustion engine is under a low load condition and the amount of exhaust gas discharged from the internal combustion engine is small, the opening/closing valve 51 is in the fully closed state by an instruction from the control unit (not illustrated). In this case, the entire amount of exhaust gas discharged from the internal combustion engine flows into the axial-flow turbine 2 via the exhaust gas flow passage 26 on the inner periphery side.

Exhaust gas which has been introduced to the exhaust gas outlet 10b of the exhaust gas inlet casing 10 is introduced to the turbine nozzle 5 through the exhaust gas outlet 10b of the exhaust gas inlet casing 10. After passing through the turbine nozzle 5, the exhaust gas is discharged from the downstream side of the turbine nozzle 5, thereby being introduced to all of the turbine rotor blades 4. The exhaust gas which has been introduced to all of the turbine rotor blades 4 as described above expands when passing through the turbine rotor blades 4, thereby rotating the turbine disk 6 and the rotor shaft 3.

Meanwhile, when the internal combustion engine is under a high load condition and the amount of exhaust gas discharged from the internal combustion engine is significant, the opening/closing valve 51 is in the fully open state by an instruction from the control unit (not illustrated). In this case, a portion of exhaust gas (for example, 4% to 20% of the entire amount of exhaust gas) discharged from the internal combustion engine flows into the bypass flow passage 52, and the remaining exhaust gas (for example, 96% to 80% of the entire amount) passes through the exhaust gas flow passage 26, thereby being introduced to the exhaust gas outlet 10b of the exhaust gas inlet casing 10.

As described above, when the opening/closing valve 51 is controlled by the control unit (not illustrated) so as to be in a state of any one of the open state and the closed state in multiple stages having different opening degrees, it is preferable that the opening degrees of the opening/closing valve 51 are suitably controlled in accordance with various conditions so as to prevent deterioration of the fuel efficiency of the internal combustion engine. For example, it is preferable that the control unit is caused to change the opening degrees of the opening/closing valve 51 at the necessary minimum in accordance with a temperature of suction air of the compressor (not illustrated) included in the turbocharger 1 or a load of the internal combustion engine. In this manner, it is possible to prevent an occurrence of rapid change in the flow rate of combustion air which may cause deterioration of the fuel efficiency of the internal combustion engine.

Exhaust gas which has been introduced to the bypass flow passage 52 passes through the exhaust gas flow passage 32 and the penetration hole 48 and is introduced to the space S1, thereby being discharged to the outside through the exhaust gas outlet 28a of the exhaust outlet casing 28 together with exhaust gas which has passed through the turbine rotor blades 4. Then, exhaust gas expands when passing through the turbine rotor blades 4 and rotates the turbine disk 6 and the rotor shaft 3. Thus, the compressor provided at the other end portion of the rotor shaft 3 is driven so that air to be supplied to the internal combustion engine is compressed.

In addition, for example, when the pressure of air sent from the compressor or the pressure of air to be supplied to the combustion chamber of the internal combustion engine is lower than 0.2 MPa (2 bar) by the absolute pressure (case of a low load state), the opening/closing valve 51 becomes the fully closed state. Meanwhile, when the pressure of air sent from the compressor or the pressure of air to be supplied to the combustion chamber of the internal combustion engine is equal to or higher than 0.2 MPa (2 bar) by the absolute pressure (case of a high load operation), the opening/closing valve 51 becomes the fully open state.

As described above, in the turbocharger 1 according to the present invention, exhaust gas flowing in through the exhaust gas inlet 10a is introduced to the axial-flow turbine 2 through the exhaust gas flow passage 26 (the inner periphery side flow path) which is formed by the inner casing 21 and the outer casing 22. The exhaust gas which has passed through the axial-flow turbine 2 is introduced to the exhaust gas outlet 28a by the exhaust gas guide ring 7. In addition, exhaust gas which has flowed into the exhaust gas flow passage 26 (the inner periphery side flow path) along the direction intersecting the shaft direction of the axial-flow turbine 2 flows into the inlet section of the bypass flow passage 52 via the first opening section 22b of the outer casing 22. Since the first opening section 22b is open in the direction intersecting the shaft direction of the axial-flow turbine 2, exhaust gas having the component of velocity in the direction intersecting the shaft direction of the axial-flow turbine 2 flows into the inlet section of the bypass flow passage 52 through the first opening section 22b. The exhaust gas which has flowed in through the first opening section 22b flows into the exhaust gas flow passage 32 (the outer periphery side flow path) through the second opening section 22c and merges with exhaust gas which has passed the axial-flow turbine 2, thereby being introduced to the exhaust gas outlet 28a.

Since the bypass flow passage 52 is a passage for connecting the first opening section 22b and the second opening section 22c which are included in the outer casing 22, when the bypass flow passage 52 is closed by the opening/closing valve 51, exhaust gas on the downstream side of the opening/closing valve 51 is not introduced to the axial-flow turbine 2. Therefore, there is no bad influence caused by the exhaust gas on the downstream side of the opening/closing valve 51 affecting the performance of the turbocharger 1. In addition, exhaust gas on the upstream side of the opening/closing valve 51 is in a pressed state in the portion of the first opening section 22b by exhaust gas which tends to flow into the inlet section of the bypass flow passage 52 through the first opening section 22b. Therefore, there is no bad influence caused by the exhaust gas on the upstream side of the opening/closing valve 51 affecting the performance of the turbocharger 1. In addition, the inner casing 21 has no special structure in order to introduce exhaust gas to the bypass flow passage 52. The inner casing 21 has a structure to form the exhaust gas flow passage 26 (the inner periphery side flow path) for introducing exhaust gas to the axial-flow turbine 2, together with the outer casing 22.

In this manner, according to the turbocharger 1 of the present invention, it is possible to prevent deterioration of performance occurring when the opening/closing valve 51 is closed and to reduce man-hours to design the inner casing 21 and the manufacturing cost thereof.

In the turbocharger 1 according to the present invention, each of the inner casing 21 and the outer casing 22 is bonded to the exhaust outlet casing 28 by using the plurality of bolts. The inner casing 21 and the outer casing 22 are able to arbitrarily set the rotational position around the shaft of the axial-flow turbine 2 with respect to the exhaust gas guide ring 7 by attaching and detaching the plurality of bolts.

In this manner, the exhaust gas inlet 10a provided in the inner casing 21 and the outer casing 22, and the exhaust gas outlet 28a provided in the exhaust outlet casing 28 can be installed at arbitrary rotational positions in accordance with the environment where the turbocharger 1 is installed.

The present invention is not limited to the embodiment described above and modifications and changes can be appropriately executed as necessary without departing from the scope of the present invention as defined by the claims.

### Reference Signs List

1 TURBOCHARGER
2 AXIAL-FLOW TURBINE
3 ROTOR SHAFT
4 TURBINE ROTOR BLADE
5 TURBINE NOZZLE
7 EXHAUST GAS GUIDE RING (EXHAUST GAS GUIDE SECTION)
10 EXHAUST GAS INLET CASING (CASING)
10a EXHAUST GAS INLET
10b EXHAUST GAS OUTLET
21 INNER CASING
22 OUTER CASING
22b FIRST OPENING SECTION
22c SECOND OPENING SECTION
26 EXHAUST GAS FLOW PASSAGE (INNER PERIPHERY SIDE FLOW PATH)
28 EXHAUST OUTLET CASING
30, 60 BOLT
32 EXHAUST GAS FLOW PASSAGE (OUTER PERIPHERY SIDE FLOW PATH)
48 PENETRATION HOLE
50 BYPASS SECTION
51 OPENING/CLOSING VALVE
52 BYPASS FLOW PASSAGE

## Claims

1. An axial-flow turbine (2) which is driven by exhaust gas discharged from an internal combustion engine, the turbine comprising:
a turbine rotor blade (4);
an exhaust gas inlet casing (10) that forms an inner periphery side flow path (26) of the exhaust gas, introducing the exhaust gas that flows in through an exhaust gas inlet (10a) in a direction intersecting a rotary shaft direction of the turbine rotor blade (4), to the turbine rotor blade (4); **characterised by**
an exhaust gas guide section (7) for introducing exhaust gas which has passed through the axial-flow turbine (2) to an exhaust gas outlet (28a) of an exhaust outlet casing (28) bonded to the exhaust gas inlet casing (10) ;
a bypass section (50) that is provided in an outer periphery of the exhaust gas inlet casing (10) and forms a bypass flow path (52) for introducing the exhaust gas to the exhaust gas outlet (28a) without causing the exhaust gas to pass through the turbine rotor blade (4); and
an opening/closing valve (51) that performs opening and closing of the bypass flow path (52),
wherein the exhaust gas inlet casing (10) includes a first opening section (22b) which communicates with an inlet section of the bypass flow path (52), and a second opening section (22c) which communicates with an outlet section of the bypass flow path (52), wherein the second opening section (22c) communicates with an outer periphery side flow path (32) for introducing the exhaust gas to the exhaust gas guide section (7), thereby being discharged to the outside through the exhaust gas outlet (28a) of the exhaust outlet casing (28) together with exhaust gas which has passed through the turbine rotor blades (4),
wherein the outer periphery side flow path (32) is arranged closer to an outer periphery side of the axial-flow turbine (2) than the inner periphery side flow path (26); and
the bypass section (50) is a pipe member which is fixed to the first opening section (22b) and the second opening section (22c).

2. The axial-flow turbine (2) according to Claim 1,
wherein the exhaust gas inlet casing (10) includes an inner casing (21) which is arranged coaxially with a rotary shaft (3) of the turbine rotor blade (4), and an outer casing (22) which is arranged outside the inner casing (21) and forms an inner periphery side flow path (26) introducing the exhaust gas that flows in through an exhaust gas inlet in a direction intersecting a rotary shaft direction of the turbine rotor blade (4), to the turbine rotor blade (4) together with the inner casing (21), and
wherein the outer casing (22) has the first opening section (22b) which is open in the direction intersecting the rotary shaft direction, the second opening section (22c) which is open in the direction intersecting the rotary shaft direction, and the outer periphery side flow path (32) which is arranged closer to the outer periphery side than the inner periphery side flow path (26) and introduces the exhaust gas flowing in through the second opening section (22c), to the exhaust gas outlet (28a).

3. The axial-flow turbine (2) according to Claim 2,
wherein each of the inner casing (21) and the outer casing (22) is bonded to the exhaust outlet casing (28) which forms the exhaust gas outlet (28a) by using a plurality of bolts (60), and
wherein the inner casing (21) and the outer casing (22) are configured so as to be set at a rotational position around the rotary shaft (3) with respect to the exhaust outlet casing (28) by attaching and detaching the plurality of bolts.

4. A turbocharger (1) comprising the axial-flow turbine (2) according to any one of Claims 1 to 3.

5. An internal combustion engine comprising the turbocharger (1) according to Claim 4.

6. A ship comprising the internal combustion engine according to Claim 5.

## Patentansprüche

1. Axialturbine (2), die durch Abgas angetrieben wird, das aus einem Verbrennungsmotor ausgestoßen wird, wobei die Turbine umfasst:
eine Turbinenrotorschaufel (4);
ein Abgaseinlassgehäuse (10), das einen inneren Umfangsseitenströmungsweg (26) des Abgases bildet, der das Abgas, das durch einen Abgaseinlass (10a) in einer Richtung einströmt, die eine Drehwellenrichtung der Turbinenrotorschaufel (4) schneidet, zur Turbinenrotorschaufel (4) leitet; **gekennzeichnet durch**
einen Abgasführungsabschnitt (7) zum Leiten von Abgas, das die Axialturbine (2) durchlaufen hat, zu einem Abgasauslass (28a) eines Abgasauslassgehäuses (28), das an das Abgaseinlassgehäuse (10) gebunden ist;
einen Umgehungsabschnitt (50), der in einem äußeren Umfang des Abgaseinlassgehäuses (10) bereitgestellt ist und einen Umgehungsströmungsweg (52) zum Leiten des Abgases zum Abgasauslass (28a) bildet, ohne das Abgas zu veranlassen, die Turbinenrotorschaufel (4) zu durchlaufen; und
ein Öffnungs-/Schließventil (51), das ein Öffnen und Schließen des Umgehungsströmungswegs (52) ausführt,
wobei das Abgaseinlassgehäuse (10) einen ersten Öffnungsabschnitt (22b), der mit einem Einlassabschnitt des Umgehungsströmungswegs (52) kommuniziert, und einen zweiten Öffnungsabschnitt (22c), der mit einem Auslassabschnitt des Umgehungsströmungswegs (52) kommuniziert, einschließt, wobei der zweite Öffnungsabschnitt (22c) mit einem äußeren Umfangsseitenströmungsweg (32) zum Leiten des Abgases zum Abgasführungsabschnitt (7) kommuniziert, und dabei nach außen durch den Abgasauslass (28a) des Abgasauslassgehäuses (28) gemeinsam mit Abgas, das die Turbinenrotorschaufeln (4) durchlaufen hat, ausgestoßen wird,
wobei der äußere Umfangsseitenströmungsweg (32) näher an einer äußeren Umfangsseite der Axialturbine (2) angeordnet ist als der innere Umfangsseitenströmungsweg (26); und
der Umgehungsabschnitt (50) ein Rohrelement ist, das am ersten Öffnungsabschnitt (22b) und am zweiten Öffnungsabschnitt (22c) fixiert ist.

2. Axialturbine (2) nach Anspruch 1,
wobei das Abgaseinlassgehäuse (10) ein inneres Gehäuse (21), das koaxial mit einer Drehwelle (3) der Turbinenrotorschaufel (4) angeordnet ist, und ein äußeres Gehäuse (22) einschließt, das außerhalb des inneren Gehäuses (21) angeordnet ist und gemeinsam mit dem inneren Gehäuse (21) einen inneren Umfangsseitenströmungsweg (26) bildet, der Abgas, das durch einen Abgaseinlass in einer Richtung einströmt, die eine Drehwellenrichtung der Turbinenrotorschaufel (4) schneidet, zur Turbinenrotorschaufel (4) leitet, und
wobei das äußere Gehäuse (22) den ersten Öffnungsabschnitt (22b), der in der Richtung, die die Drehwellenrichtung schneidet, offen ist, den zweiten Öffnungsabschnitt (22c), der in der Richtung, die die Drehwellenrichtung schneidet, offen ist, und den äußeren Umfangsseitenströmungsweg (32), der näher an der äußeren Umfangsseite angeordnet ist als der innere Umfangsseitenströmungsweg (26) und das Abgas, das durch den zweiten Öffnungsabschnitt (22c) einströmt, zum Abgasauslass (28a) leitet, aufweist.

3. Axialturbine (2) nach Anspruch 2,
wobei jedes des inneren Gehäuses (21) und des äußeren Gehäuses (22) an das Abgasauslassgehäuse (28), das den Abgasauslass (28a) bildet, unter Verwendung einer Vielzahl von Bolzen (60) gebunden ist, und
wobei das innere Gehäuse (21) und das äußere Gehäuse (22) konfiguriert sind, um bei einer Drehposition um die Drehwelle (3) in Bezug auf das Abgasauslassgehäuse (28) durch Befestigen und Lösen der Vielzahl von Bolzen eingestellt zu sein.

4. Turbolader (1), umfassend die Axialturbine (2) nach einem der Ansprüche 1 bis 3.

5. Verbrennungsmotor, umfassend den Turbolader (1) nach Anspruch 4.

6. Schiff, umfassend den Verbrennungsmotor nach Anspruch 5.

## Revendications

1. Turbine à écoulement axial (2) qui est entraînée par les gaz d'échappement évacués d'un moteur à combustion interne, la turbine comprenant :
une pale de rotor de turbine (4) ;
un carter d'entrée de gaz d'échappement (10) qui forme un trajet d'écoulement côté périphérie interne (26) des gaz d'échappement, en introduisant les gaz d'échappement qui s'écoulent vers l'intérieur à travers une entrée de gaz d'échappement (10a) dans une direction recoupant une direction d'arbre rotatif de la pale de rotor de turbine (4), jusqu'à la pale de rotor de turbine (4) ; **caractérisée par**
une section de guidage de gaz d'échappement (7) pour introduire les gaz d'échappement qui sont passés à travers la turbine à écoulement axial (2) jusqu'à une sortie de gaz d'échappement (28a) d'un carter de sortie d'échappement (28) relié au carter d'entrée de gaz d'échappement (10) ;
une section de dérivation (50) qui est prévue dans une périphérie externe du carter d'entrée de gaz d'échappement (10) et forme un trajet d'écoulement de dérivation (52) pour introduire les gaz d'échappement vers la sortie de gaz d'échappement (28a) sans amener les gaz d'échappement à passer à travers la pale de rotor de turbine (4) ; et
une vanne d'ouverture/fermeture (51) qui effectue l'ouverture et la fermeture du trajet d'écoulement de dérivation (52),
dans laquelle le carter d'entrée de gaz d'échappement (10) comprend une première section d'ouverture (22b) qui communique avec une section d'entrée du trajet d'écoulement de dérivation (52), et une seconde section d'ouverture (22c) qui communique avec une section de sortie du trajet d'écoulement de dérivation (52), dans laquelle la seconde section d'ouverture (22c) communique avec un trajet d'écoulement côté périphérie externe (32) pour introduire les gaz d'échappement vers la section de guidage de gaz d'échappement (7), en étant ainsi évacués vers l'extérieur à travers la sortie de gaz d'échappement (28a) du carter de sortie d'échappement (28) avec les gaz d'échappement qui ont traversé les pales de rotor de turbine (4),
dans lequel le trajet d'écoulement côté périphérie externe (32) est agencé plus près d'un côté périphérie externe de la turbine à écoulement axial (2) que le trajet d'écoulement côté périphérie interne (26) ; et
la section de dérivation (50) est un élément de tuyau qui est fixé à la première section d'ouverture (22b) et à la seconde section d'ouverture (22c).

2. Turbine à écoulement axial (2) selon la revendication 1,
dans lequel le carter d'entrée de gaz d'échappement (10) comprend un carter interne (21) qui est agencé coaxialement avec un arbre rotatif (3) de la pale de rotor de turbine (4), et un carter externe (22) qui est agencé à l'extérieur du carter interne (21) et forme un trajet d'écoulement côté périphérie interne (26) introduisant les gaz d'échappement qui s'écoulent vers l'intérieur à travers une entrée de gaz d'échappement dans une direction recoupant une direction d'arbre rotatif de la pale de rotor de turbine (4), vers la pale de rotor de turbine (4) avec le carter interne (21), et
dans lequel le carter externe (22) a la première section d'ouverture (22b) qui est ouverte dans la direction recoupant la direction d'arbre rotatif, la seconde section d'ouverture (22c) qui est ouverte dans la direction recoupant la direction d'arbre rotatif, et le trajet d'écoulement côté périphérie externe (32) qui est agencé plus près du trajet d'écoulement côté périphérie externe que du trajet d'écoulement côté périphérie interne (26), et introduit les gaz d'échappement s'écoulant vers l'intérieur à travers la section d'ouverture (22c), vers la sortie de gaz d'échappement (28a).

3. Turbine à écoulement axial (2) selon la revendication 2,
dans lequel chacun du carter interne (21) et du carter externe (22) est lié au carter de sortie d'échappement (28) qui forme la sortie de gaz d'échappement (28a) en utilisant une pluralité de boulons (60), et
dans lequel le carter interne (21) et le carter externe (22) sont configurés de manière à être réglés dans une position de rotation autour de l'arbre rotatif (3) par rapport au carter de sortie d'échappement (28) en attachant et détachant la pluralité de boulons.

4. Turbocompresseur (1) comprenant la turbine à écoulement axial (2) selon l'une quelconque des revendications 1 à 3.

5. Moteur à combustion interne comprenant le turbocompresseur (1) selon la revendication 4.

6. Navire comprenant le moteur à combustion interne selon la revendication 5.
